# EUROPEAN PATENT APPLICATION

(11) **EP 3 750 724 A1**
(43) Date of publication of application: **16.12.2020**
(21) Application number: 19180193.5
(22) Date of filing: 14.06.2019
(51) Int. Cl.: B60G 3/12, B60G 17/0165, B62D 49/06

(54) **INTEGRATED SUSPENSION AND CLEARANCE ASSEMBLY AND AGRICULTURAL MACHINE WITH SUCH**

(71) Applicant: Deere & Company, Moline, IL 61265 (US)
(72) Inventor: Corzani, Fabio, 68163 Mannheim (DE); Mazzotti, Carlo, 68163 Mannheim (DE)
(74) Representative: Reichert, Christian

(57) **Abstract**

An integrated suspension and clearance assembly (23) for an agricultural machine is disclosed. The assembly comprising a wheel hub (22), a wheel hub attachment component (24) fixedly attachable to said wheel hub (22). A suspension component (30) is pivotally attached to said wheel hub attachment component (24) with one end (34), and a first clearance linkage (32) is attached to said wheel hub attachment component (24) with a first pivot (42) and with a second pivot (44) to another end (46) of said suspension component (30). A second clearance linkage (48) is fixedly attachable to an agricultural machine frame (12) and comprises a pivot end (52) attached to a third pivot (56) of said first clearance linkage (32). The assembly further comprises a telescopic cylinder (58) with one end (60) fixedly attached to said first clearance linkage (32) and with another end (64) pivotally attached to said second clearance linkage (48), wherein, said telescopic cylinder (58) is variably retracting and extending to change pivotal positions of said first clearance linkage (32) and said second clearance linkage (48) relative to each other to raise and lower an agricultural machine frame (12) relative to said wheel hub (22) for variable ground clearance during agricultural operations and, wherein, at the same time, movements and/or vibrations between said wheel hub (22) and an agricultural machine frame (12) can be damped or suspended hydraulically with said suspension component (30).

## Description

### Field of the Disclosure

The present disclosure generally relates to agricultural machines, particularly to self-propelled sprayers and more particularly to an integrated suspension and clearance assembly for self-propelled sprayers.

### Background of the Disclosure

Agricultural machines, for example a self-propelled sprayer, may be used to distribute chemicals, such as herbicides, pesticides, and fertilizes over crops in a field during a spraying operation. The chemicals may be maintained in a liquid solution and stored in a tank which is generally mounted on the frame of self-propelled sprayer. The chemicals may discharge through nozzles mounted on spray booms extending sideward from the machine during a spraying operation. Self-propelled sprayers may have wheels configured to pass between crop rows during the spraying operation over the crops in a field. Crop damage is one of the vital aspects of ineffective spraying. To avoid crop damage wheel width and track width should be appropriate.

Along with this, the ground clearance of the self-propelled sprayer plays an important role during spraying operation to avoid crop damage. While a usual height of self-propelled sprayer may be used to spray over short length crops, different heights of self-propelled sprayers may be needed over the growing phases of crops. For example, high clearance sprayers may be used for matured crops. While high clearance sprayers provide enough clearance to pass over the top of matured crops, they suffer from various limitations. For example, high clearance sprayers may not be effective in spraying operations over short length crops. There may be distortion in spray patterns due to wind while spraying from the height over short length crops and to avoid the distortion spray booms may be lowered to specific height adding complexity in boom lifting mechanism. Moreover, high clearance sprayers may have an overall height that exceeds highway height restrictions, thereby making the transport of such vehicles to and from the field difficult and it may exceed the height limit when placed on a transport trailer. Thus, measures may need to be taken to lower the vehicle to an acceptable transport height, such as deflating the tires or entirely removing the wheels.

While dropdown gear boxes may be developed and configured to lower the frame of high clearance sprayers as per the need to spray over short length crops, gear boxes increase cost and complexity of the sprayer. Complexity may lead to breakdown of sprayers in turn delays in applying chemicals to the crops. Moreover, few solutions may be available to increase or decrease the ground clearance of an existing vehicle but those may be complicated, complex, component intensive and may require the removal of existing vehicle components and/or the addition of new components.

Due to addition of new parts to an agricultural sprayer for suspension and/or clearance purpose, the sprayer may get bulky which may lead to crop interference during its travel from crop rows for spraying operations and in turn may result in crop damage. Further, addition of new components may make the machine complex and costly and may further pose instability during spraying operations. Instability may be the hazardous during transportation of such heavy agricultural sprayer to and from the field.

### Summary of the Disclosure

It is therefore an object of the present invention to provide an integrated suspension and clearance assembly for an agricultural sprayer which overcomes most or all of the aforementioned problems.

The object will be achieved by the teaching of claim 1 and 11. Further advantageous embodiments are defined in the subclaims.

Accordingly, an integrated suspension and clearance assembly for an agricultural machine is provided, wherein the assembly comprises a wheel hub and a wheel hub attachment component, fixedly attachable to the wheel hub. The assembly further comprises a suspension component with one end pivotally attached to said wheel hub attachment component and a first clearance linkage with a first pivot attached to said wheel hub attachment component and with a second pivot attached to another end of said suspension component. A second clearance linkage is fixedly attachable to an agricultural machine frame and comprises a pivot end attached to a third pivot of said first clearance linkage. A telescopic cylinder is arranged with one end fixedly attached to said first clearance linkage and with another end pivotally attached to said second clearance linkage, wherein said telescopic cylinder is variably retracting and extending to change pivotal positions of said first and said second clearance linkages relative to each other to raise and lower an agricultural machine frame relative to the wheel hub for variable ground clearance during agricultural operations. At the same time movements and/or vibrations between said wheel hub and an agricultural machine frame can be damped or suspended hydraulically with said suspension component.

Moreover, said telescopic cylinder is a hydraulic cylinder. Alternatively, the telescopic cylinder can be an electric actuator or pneumatic cylinder or any such similar component. Said telescopic cylinder can be remotely operable to extend and retract according to the need. There might be further the possibility to combine the operation of the telescopic cylinder with a crop sensor, detecting the height of the crop or plants and adjusting the telescopic cylinder accordingly for an automatic, sensor based, height regulation/adjustment of the machine. A respective controller receiving the sensor data for sensing/detecting the height of the crop or plants will then be connected to a respective hydraulic, electric or pneumatic control for the cylinder.

Said wheel hub attachment component, said first clearance linkage and said second clearance linkage comprising plates, panels, sheets or any similar flat surfaces in order to make the assembly compact in width to fit in crop rows without any crop interference during spraying operations. As the suspension component is integrated in between the wheel hub attachment component and the first clearance linkage the compactness of the suspension and clearance assembly is optimized.

Said first clearance linkage and said second clearance linkage comprising arc shaped or curved, or angular plates in order to accommodate movement around said wheel hub during actuation of said telescopic cylinder for providing ground clearance to said agricultural machine. Said arc shaped plates having a first and a second end portion for providing respective joints with other mentioned components. Alternatively, said wheel hub attachment component, said first clearance linkage and said second clearance linkage can be manufactured and mounted in such a way that it can be placed with a tolerance within the inner diameter of wheel for even more compactness.

Said wheel hub attachment component comprising a wheel hub portion coaxially arranged to the wheel hub and a connecting portion offset from said wheel hub portion. The wheel hub portion can be of a ring-shaped form or of other shaped form surrounding the circumference of a wheel hub entirely. The connecting portion extends from said wheel hub portion and comprises said first pivot of said first clearance linkage.

A first end portion of said first clearance linkage is pivotally attached to the connecting portion of said wheel hub attachment component and said suspension component is arranged between said wheel hub and said first pivot of said first clearance linkage. Alternatively, said suspension component can be arranged anywhere on the assembly to damp vibrations between wheel hub and agricultural machine frame, as long as a relative movement between the wheel hub component and the first clearance linkage can be associated with an extraction or retraction (length change) of the suspension component.

Said telescopic cylinder is arranged to extend from said first end portion of said first clearance linkage to a pivot located between said first and second end portion of said second clearance linkage.

Said first end portion of said second clearance linkage is fixedly attachable to an agricultural machine frame. It is not necessarily needed that said attachment of the second clearance linkage is directly connected to the frame, wherein the movement of the first end portion of said second clearance linkage relative to the wheel hub is directly associated to a height clearance change of the frame relative to the ground. Said second end portion of said first clearance linkage and said second end portion of said second clearance linkage are linked together by said third pivot, so that the first and second clearance linkages are providing a scissor type supporting structure.

Agricultural machine comprising a machine frame with ground engaging wheels. Each wheel is mounted on a wheel hub associated to an integrated suspension and clearance assembly. Further, an agricultural machine is one of a self-propelled sprayer, trailed sprayer, windrower or tractor. It would be also possible to equip other type of agricultural machines with such an integrated suspension and clearance assembly, e.g. a harvesting machine.

### Brief Description of the Drawings

FIG. 1 shows a front perspective view of an agricultural machine incorporating principles of the present invention.
FIG. 2 shows a front perspective view of a frame and wheel portion of the agricultural machine of Fig. 1,
Fig. 3 shows a side view of an integrated suspension and clearance assembly in retracted position.
Fig. 4 shows a front perspective view of Fig. 3.
Fig. 5 shows a side view of the integrated suspension and clearance assembly of

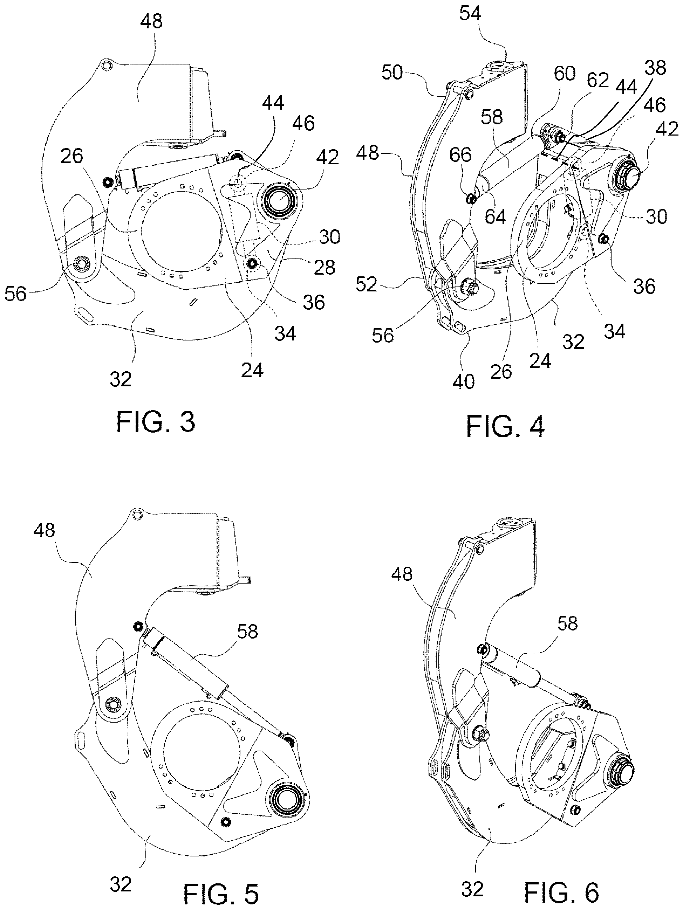

Fig. 3 in extended position.
Fig. 6 shows a front perspective view of Fig. 5.

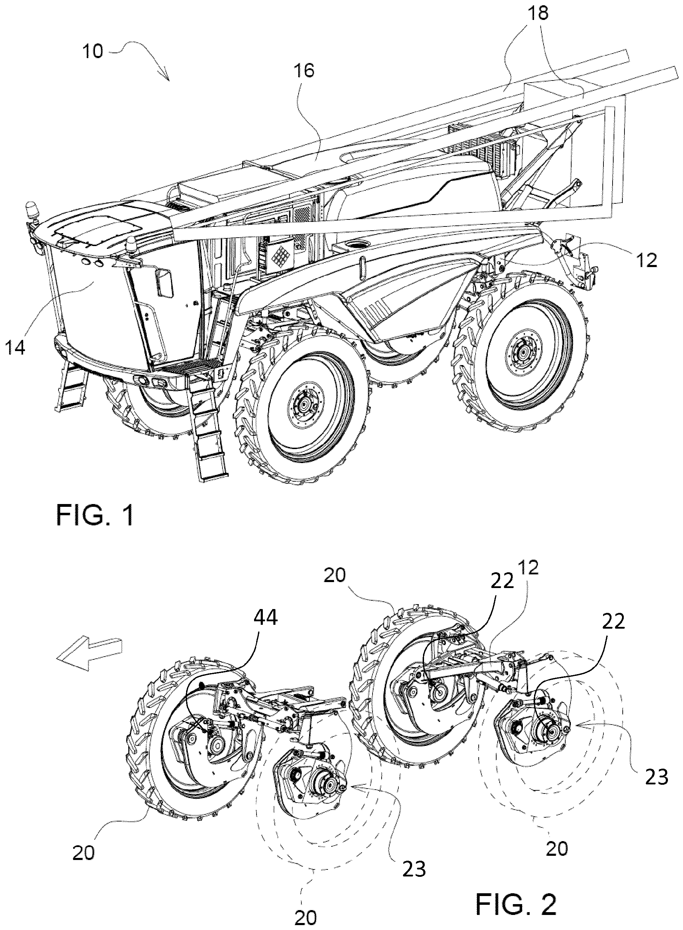

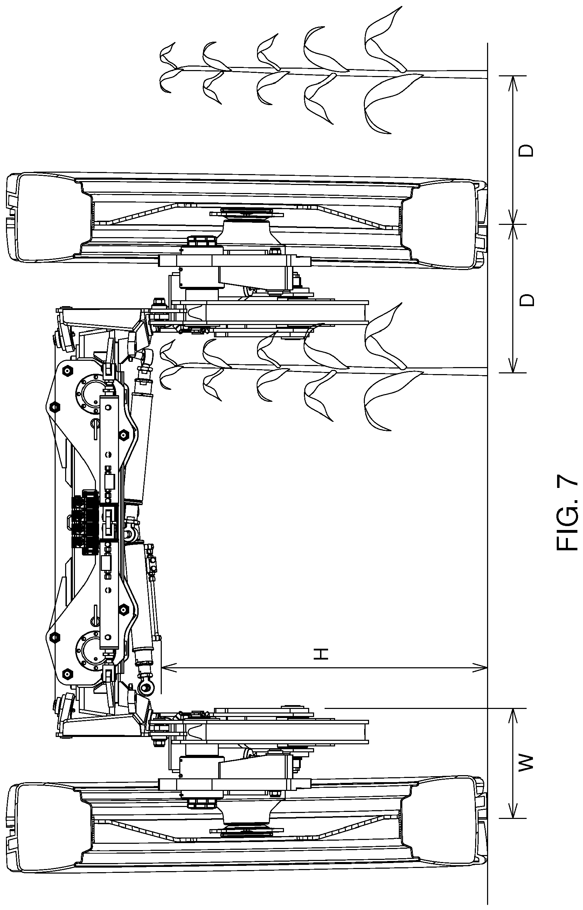

Fig. 7 shows a front view of the frame and wheel portion of Fig. 2 during its travel through crop row.

### Detailed Description

Referring now to FIG. 1, there is shown an agricultural machine such as a self-propelled sprayer 10. The self-propelled sprayer 10 includes a frame 12 that provides a structure for mounting numerous components associated with the self-propelled sprayer 10 thereon. For example, the self-propelled sprayer 10 includes a cab 14 which is mounted on the frame 12. The cab 14 houses a seat for an operator and several controls which may be manipulated by the operator in order to control operation of the self-propelled sprayer 10 during performance of a work function such as an agricultural spraying function.

The self-propelled sprayer 10 further includes a storage tank 16 which stores a spray liquid comprising chemicals such as herbicides, pesticides, and fertilizers that are to be sprayed on a field. The storage tank 16 is mounted on the frame 12 at a location which is aft of the cab 14. The self-propelled sprayer 10 also includes a spray boom assembly 18 operable to distribute the chemicals in the storage tank 16 over a wide area in a field. In particular, the liquid chemicals are distributed by a number of nozzles (not shown), which are spaced along the spray boom assembly 18, through which the liquid chemicals are sprayed as the self-propelled sprayer 10 is propelled along the rows associated with a field of crop or plants. In alternative embodiments, spray boom assembly 18 may be located at different locations on the self-propelled sprayer 10 such as at the front end or in the mid-portion of the self-propelled sprayer 10.

As best shown in FIG. 2, the frame 12 is supported by front and rear ground engaging wheels 20. The ground engaging wheels 20 are each mounted on a wheel hub 22. On the inner side of each wheel 20 and wheel hub 22, respectively, the self-propelled sprayer 10 is equipped with integrated suspension and clearance assemblies 23, best shown in FIG. 2. The integrated suspension and clearance assemblies 23, as shown in more detail in FIG. 3 to FIG. 6, each comprises a wheel hub attachment component 24, fixedly attached to a respective wheel hub 22. The wheel hub attachment component 24 includes a wheel hub portion 26 and a connecting portion 28. The wheel hub portion 26 is coaxially arranged on the wheel hub 22 and the connecting portion 28 is offset from the wheel hub portion 26. Further, each integrated suspension and clearance assembly 23 comprises a suspension component 30 and a first clearance linkage 32. One of the ends 34 of the suspension component 30 is pivotally attached at a pivot 36 to the wheel hub attachment component 24. The suspension component 30 includes accumulator and telescopic cylinder assembly or pneumatic spring or similar motion regulating assembly.

As shown further in Fig. 3 to FIG. 6, the first clearance linkage 32 is having two end portions, a first end portion 38 and a second end portion 40. The first end portion 38 of the first clearance linkage 32 is attached pivotally to a first pivot 42 to the connecting portion 28 of the wheel hub attachment component 24 and further attached pivotally with a second pivot 44, also shown in FIG: 2 and FIG. 4 as dotted line, to another end 46 of the suspension component 30.

Hence, the suspension component 30 is arranged between said wheel hub 22 and said first pivot 42 of said first clearance linkage 32 and is extending from its one end 34 with pivot 36 on the connecting portion 28 of the wheel hub attachment component 24 to its other end 46 with pivot 44 on the first end portion 38 of the first clearance linkage 32. Vibration and shocks generated due to field undulations or irregularities in the field will be transferred to the wheel hub 22. In motion of the self-propelled sprayer 10, this will cause to move the wheel hub attachment component 24 and the first clearance linkage 32 to move relative to each other. Such movements are effectively absorbed by the suspension component 30 of the self-propelled sprayer 10.

Like the first clearance linkage 32, a second clearance linkage 48 is also having two end portions, namely a first end portion 50 and a second end portion 52 or pivot end. The first end portion 50 of the second clearance linkage 48 is fixedly attached to the frame 12 at point 54 and the second end portion 52 of the second clearance linkage 48 is pivotally attached to a third pivot 56 on the second portion 40 of the first clearance linkage 32. As shown in Fig. 3 and 4, the wheel hub attachment component 24, the first clearance linkage 32 and the second clearance linkage 48 are all made of flat-shaped plates or any similar flat surfaces, wherein the first clearance linkage 32 and the second clearance linkage 48 comprising an arc-curved, bend, bow, half-moon, semi-circular or any similar shaped form.

Continuing with Fig. 4, a telescopic cylinder 58 is having two ends. One of the ends 60 of the telescopic cylinder 58 is fixedly attached at point 62 to the first end portion 38 of the first clearance linkage 32. Another end 64 of the telescopic cylinder 58 is pivotally attached at pivot 66 between the first end portion 50 and second end portion 52 of the second clearance linkage 48. The telescopic cylinder 58 is arranged to extend and retract between the first clearance linkage 32 and the second clearance linkage 48, so as to move the first and second clearance linkage (32, 48) in a scissor-type relative movement to each other when in motion. The telescopic cylinder 58 is a hydraulic cylinder.

As shown in FIG. 3 to FIG. 6, the telescopic cylinder 58 may be extended and retracted hydraulically in a variable manner to variably increase and decrease ground clearance of the self-propelled sprayer 10. Extension and retraction of the telescopic cylinder 58 leads to change in pivotal positions of the first clearance linkage 32 and the second clearance linkage 48 relative to each other which raises and lowers the frame 12 of the self-propelled sprayer 10 relative to the wheel hub from its initial position to maximum height. Simultaneously, the suspension component 30 hydraulically damps the movements and/or vibrations between the wheel hub 22 and the frame 12.

Thus, in the above described embodiment, the integrated suspension and clearance assembly 23 is mounted on each ground engaging wheel 20 of the agricultural sprayer 10. The integrated suspension and clearance assembly 23 is combined or arranged integrally which allows for a compact design with a width "W" as shown in Fig. 7. Further, the compact design of such an assembly 23 allows easy travel of the self-propelled sprayer 10 from the crop rows, where said ground engaging wheels 20 can travel at distance "D" from either side of said ground engaging wheel 20 to the crop rows. Moreover, the assembly allows increased stability for the self-propelled sprayer 10 in lowered position due to its compact width "W". The maximum ground clearance of the self-propelled sprayer 10 is defined by height "H" above the ground.

## Claims

1. An integrated suspension and clearance assembly (23) for an agricultural machine (10) comprising:
a wheel hub (22);
a wheel hub attachment component (24) fixedly attached to said wheel hub (22);
a suspension component (30) with one end (34) pivotally attached to said wheel hub attachment component (24);
a first clearance linkage (32) with a first pivot (42) attached to said wheel hub attachment component (24) and with a second pivot (44) attached to another end (46) of said suspension component (30);
a second clearance linkage (48) fixedly attachable to an agricultural machine frame (12) and comprising a pivot end (52) attached to a third pivot (56) of said first clearance linkage (32);
a telescopic cylinder (58) with one end (60) fixedly attached to said first clearance linkage (32) and another end (64) pivotally attached to said second clearance linkage (48),
wherein, said telescopic cylinder (58) variably retracting and extending to change pivotal positions of said first clearance linkage (32) and said second clearance linkage (48) relative to each other to raise and lower an agricultural machine frame (12) relative to said wheel hub (22) for variable ground clearance during agricultural operations and;
wherein, at the same time movements and/or vibrations between said wheel hub (22) and an agricultural machine frame (12) can be damped or suspended hydraulically with said suspension component (30).

2. The integrated suspension and clearance assembly (23) according to claim 1, wherein said suspension component (30) comprising a dampening and/or suspension device.

3. The integrated suspension and clearance assembly (23) according to claim 1 or 2, wherein said telescopic cylinder (58) comprising a hydraulic cylinder.

4. The integrated suspension and clearance assembly (23) according to one of the claims 1 to 3, wherein one or more of said wheel hub attachment component (24), said first clearance linkage (32) and said second clearance linkage (48) comprising plates.

5. The integrated suspension and clearance assembly (23) according to one of the claims 1 to 4, wherein said first clearance linkage (32) and said second clearance linkage (48) comprising arc shaped plates, wherein said arc shaped plates having a first end portion (38, 50) and a second end portion (40, 52).

6. The integrated suspension and clearance assembly (23) according to one of the claims 1 to 5, wherein said wheel hub attachment component (24) comprising a wheel hub portion (26) coaxially arranged to said wheel hub (22) and a connecting portion (28) offset from said wheel hub portion (26), said connecting portion (28) comprising said first pivot (42) of said first clearance linkage (32).

7. The integrated suspension and clearance assembly (23) according to claim 6, wherein the first end portion (38) of said first clearance linkage (32) is pivotally attached to said connecting portion (28) of said wheel hub attachment component (24), and wherein said suspension component (30) is arranged between said wheel hub (22) and said first pivot (42) of said first clearance linkage (32).

8. The integrated suspension and clearance assembly (23) according to one of the claims 5 to 7, wherein said telescopic cylinder (58) is arranged to extend from said first end portion (38) of said first clearance linkage (32) to a pivot (66) located between said first end portion (50) and second end portion (52) of said second clearance linkage (48).

9. The integrated suspension and clearance assembly (23) according to one of the claims 5 to 8, wherein said first end portion (50) of said second clearance linkage (48) is fixedly attachable to an agricultural machine frame (12).

10. The integrated suspension and clearance assembly (23) according to claim one of the claims 5 to 9, wherein said second end portion (40) of said first clearance linkage (32) and said second end portion (52) of said second clearance linkage (48) are linked together by said third pivot (56).

11. Agricultural machine (10) comprising:
a machine frame (12) with ground engaging wheels (20) and further comprising integrated suspension and clearance assemblies (23) according to one of the claims 1 to 10, wherein each ground engaging wheel (20) is mounted on a respective wheel hub (22) associated to said respective integrated clearance and suspension assembly (23).

12. Agricultural machine (10) according to claim 11, wherein the agricultural machine (10) is one of a self-propelled sprayer, trailed sprayer, windrower or tractor.
